# FASCICULE DE BREVET EUROPEEN

(11) **EP 4 392 300 B1**
(45) Date de publication et mention de la délivrance du brevet: **25.06.2025**
(21) Numéro de dépôt: 22754471.5
(22) Date de dépôt: 13.07.2022
(51) Int. Cl.: B60W 60/00, B60W 30/14, B60W 50/00, B60W 50/14

(54) **PROCÉDÉ ET SYSTÈME POUR GÉRER LE FONCTIONNEMENT D'UN APPAREILLAGE D'AIDE À LA CONDUITE D'UN VÉHICULE AUTOMOBILE À L'APPROCHE DE LIEUX SOUMIS À UNE RÉGLEMENTATION PARTICULIÈRE DU CODE DE LA ROUTE**
VERFAHREN UND SYSTEM ZUR VERWALTUNG DES BETRIEBS EINER FAHRERASSISTENZVORRICHTUNG FÜR EIN KRAFTFAHRZEUG BEI ANNÄHERUNG AN STANDORTE MIT BESTIMMTEN AUTOBAHNCODEREGELN
METHOD AND SYSTEM FOR MANAGING THE OPERATION OF A DRIVING ASSISTANCE APPARATUS FOR A MOTOR VEHICLE WHEN APPROACHING LOCATIONS SUBJECT TO PARTICULAR HIGHWAY CODE REGULATIONS

(30) Priorité: 24.08.2021 FR 2108841
(43) Date de publication de la demande: 03.07.2024
(73) Titulaire: Stellantis Auto SAS, 78300 Poissy (FR)
(72) Inventeur: ET-THAQFY, Yassine, Casablanca, 20620 (MA); EL HANBALI, Hamza, Casablanca, 20580 (MA); NID BOUHOU, Soumia, Casablanca, 20580 (MA); AIT ALI, Meriem, Casablanca, 20580 (MA); LAHLOU, Zoubida, Casablanca, 20190 (MA); GAUTHIER, Pierre Clement, 51100 Reims (FR)
(74) Mandataire: ESIP
(86) Numéro de dépôt international: PCT/FR2022/051409
(87) Numéro de publication internationale: WO 2023/025996

(56) Documents cités:
- EP-A2- 3 177 500
- DE-A1- 102012 213 321
- US-A1- 2018 292 833

## Description

### Domaine technique de l'invention

La présente invention concerne le domaine des systèmes électroniques et informatiques embarqués à bord des véhicules automobiles pour améliorer la sécurité de la conduite. L'invention porte en particulier sur un procédé de gestion, par un système informatique embarqué à bord d'un véhicule automobile, du fonctionnement d'un appareillage d'aide à la conduite du véhicule. L'invention concerne également un système mettant en œuvre un tel procédé. L'invention s'applique, notamment, aux voitures de tourisme, aux véhicules utilitaires et aux poids lourds.

### État de la technique antérieure

On sait que la plupart des véhicules automobiles actuels sont équipés d'appareillages informatiques et électroniques qui fournissent des fonctionnalités d'aide à la conduite, en particulier des fonctionnalités qui permettent d'assurer le guidage autonome des véhicules. De manière générale, de tels appareillages fonctionnent en exploitant des données générées par des appareils de détection agencés dans les véhicules (e.g. caméra, radar, lidar, etc.), données sur lesquelles ils s'appuient pour fournir les fonctionnalités d'aide à la conduite. Par exemple, on sait que certains appareillages d'aide à la conduite connus exploitent les données générées par une caméra pour détecter et reconnaître les panneaux de signalisation qui sont disposés aux abords des voies de circulation afin de gérer de manière appropriée le guidage des véhicules selon les règlementations du code de la route. Cependant, on sait qu'une perception précise de l'environnement de conduite par les appareils de détection d'un appareillage d'aide à la conduite d'un véhicule automobile dépend directement de la portée de détection de ceux-ci, des conditions de luminosité, des conditions météorologiques, et, même, de la croissance de la végétation. Ainsi, il peut donc se produire des situations dans lesquelles les appareils de détection sont incapables de détecter et reconnaître les panneaux de signalisation, et, dans de tels cas, le bon fonctionnement des appareillages d'aide à la conduite connus qui se basent uniquement sur la détection et la reconnaissance de panneaux de signalisation par des appareils de détection embarqués pour gérer le guidage des véhicules ne peut donc plus être assurée de manière sûre. Par exemple, si un appareillage d'aide à la conduite base son fonctionnement sur la détection et la reconnaissance de panneaux de signalisation uniquement au moyen d'appareils de détection embarqués, il ne sera par exemple pas en mesure de gérer le guidage du véhicule à l'approche d'une section en travaux s'il n'a pas détecté le panneau de signalisation qui l'annonce. Et, dans une telle situation, l'appareillage d'aide à la conduite fera indubitablement courir un risque aux occupants du véhicule puisqu'il ne rendra pas la main au conducteur du véhicule alors que celui-ci emprunte la section en travaux.

EP3177500 divulgue un système d'assistance au conducteur dans un véhicule automobile. Le système d'assistance au conducteur comprend un système de détection servant à identifier des événements précédents, qui permettent du fait d'une suppression d'une limitation applicable actuellement de la vitesse une augmentation de la vitesse actuelle, une unité fonctionnelle servant à déterminer une stratégie d'accélération servant à augmenter la vitesse, et un système d'indication servant à émettre une indication de requête au conducteur afin d'autoriser une mise en œuvre automatique de la stratégie d'accélération. L'unité fonctionnelle entraîne, lors de la confirmation de l'indication de requête par le conducteur, la mise en œuvre automatique de la stratégie d'accélération.

DE102012213321 divulgue un procédé pour faire fonctionner un véhicule, dans lequel, pendant une marche en roue libre du véhicule, afin d'atteindre une position d'itinéraire d'un itinéraire encore à parcourir à une vitesse souhaitée qui est inférieure à une vitesse du véhicule, la vitesse réelle d'un véhicule est comparée à une vitesse cible du véhicule et une action est exécutée en fonction de la comparaison.

### Résumé de l'invention

L'invention vise à pallier ces inconvénients. L'invention a en effet pour but de fournir un procédé et un système qui contribuent pour permettre à un appareillage d'aide à la conduite d'un véhicule automobile de baser son fonctionnement, i.e. la fourniture de fonctionnalités d'aide à la conduite, sur une perception de l'environnement de conduite, notamment des panneaux de signalisation, qui soit établie autrement qu'en utilisant ses appareils de détection embarqués. Par ce biais, l'invention vise à améliorer la sécurité des fonctionnalités de conduite autonome fournies par un appareillage d'aide à la conduite d'un véhicule automobile.

Ces buts sont atteints, selon un premier objet de l'invention, au moyen d'un procédé de gestion, par un système informatique embarqué à bord d'un véhicule automobile, du fonctionnement d'un appareillage d'aide à la conduite du véhicule, le procédé comprenant les étapes de :
i) déterminer si le véhicule est en approche d'un lieu où une réglementation particulière du code de la route s'applique ; et, lorsqu'il est établi que tel est le cas,
ii) déterminer des données caractérisant un lieu en amont du lieu où une réglementation particulière du code de la route s'applique et un lieu en aval du lieu où une réglementation particulière du code de route s'applique ; et
iii) désactiver l'appareillage d'aide à la conduite entre le lieu en amont du lieu où une réglementation particulière du code de la route s'applique et le lieu en aval du lieu où une réglementation particulière du code de la route s'applique.

Selon une variante avantageuse, les étapes i) et ii) peuvent être réalisées en exploitant des données caractérisant au moins un lieu où se trouve un panneau de signalisation particulier transmises par un serveur distant.

Selon une autre variante, l'étape iii) peut comprendre une étape consistant à provoquer la diffusion d'une indication visuelle et/ou sonore par une interface homme-machine du véhicule.

En outre, l'invention a également pour objet un système pour gérer le fonctionnement d'un appareillage d'aide à la conduite d'un véhicule automobile, le système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a également pour objet un support utilisable dans un ordinateur sur lequel un programme tel que décrit ci-dessus est enregistré.

Enfin, l'invention a aussi pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un diagramme fonctionnel d'un système selon l'invention ;
[Fig. 2] est un organigramme illustrant les étapes d'un procédé selon l'invention ;
[Fig. 3] est une illustration schématique du fonctionnement du système selon l'invention en lien avec un premier environnement de conduite ;
[Fig. 4] est une illustration schématique du fonctionnement du système selon l'invention en lien avec un deuxième environnement de conduite ; et
[Fig. 5] est une illustration schématique du fonctionnement du système selon l'invention en lien avec un troisième environnement de conduite.

### Description détaillée de l'invention

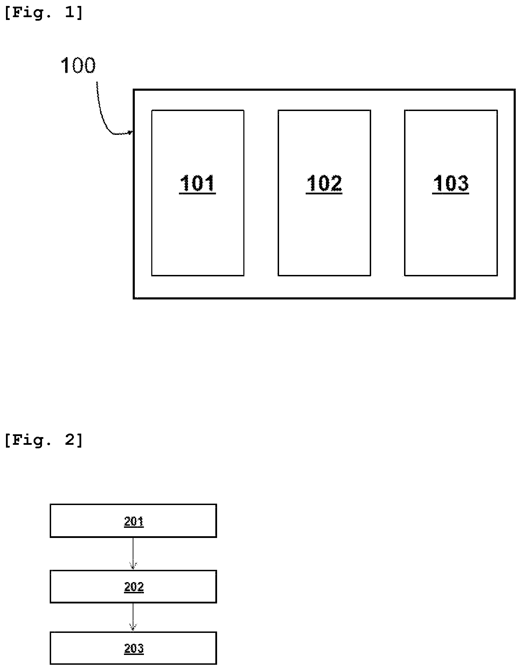

Selon l'invention, un système 100 pour gérer le fonctionnement d'un appareillage d'aide à la conduite d'un véhicule automobile est un système informatique, représenté schématiquement à la figure 1, qui comprend une unité de traitement d'informations 101, comprenant un ou plusieurs processeurs, un support de stockage de données 102, et au moins une interface d'entrée et sortie 103, permettant la réception de données et l'émission de données.

Selon certains modes de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un appareillage d'aide à la conduite d'un véhicule automobile. Selon le mode de réalisation préféré, le système 100 selon l'invention fait partie intégrante d'un calculateur d'un appareillage d'aide à la conduite d'un véhicule automobile. Par conséquent, quel que soit le mode de réalisation de l'invention, le système 100 selon l'invention est toujours en mesure d'interagir, par le biais de son interface d'entrée et sortie 103, non seulement avec un appareillage d'aide à la conduite d'un véhicule automobile, mais également, via un tel appareillage d'aide à la conduite, avec tout autre appareillage qui, de manière conventionnelle, équipe et/ou interagit avec un appareillage d'aide à la conduite d'un véhicule automobile actuel.

Et, selon l'invention, un appareillage d'aide à la conduite d'un véhicule automobile comprend au moins un appareil de détection (e.g. lidar, radar, caméra, capteur à ultrasons, centrale inertielle, accéléromètre, etc.) pour percevoir l'environnement de conduite devant le véhicule et un ou plusieurs calculateurs, ordinateurs et/ou processeurs dédiés, qui, en fonction de données brutes générées par le ou les appareils de détection, peuvent contrôler le fonctionnement de certains organes du véhicule qui gouvernent son déplacement (e.g. direction assistée électronique, correcteur électronique de trajectoire, ABS, régulateur de vitesse, etc.). Ainsi, en interagissant avec ou en faisant partie intégrante d'un tel appareillage d'aide à la conduite d'un véhicule automobile, le système 100 selon l'invention est notamment en mesure d'activer et/ou désactiver un appareillage d'aide à la conduite du véhicule et de provoquer une décélération du véhicule.

De plus, pour mettre en œuvre au moins une étape du procédé selon l'invention décrit ci-dessous, le système 100 selon l'invention comprend des moyens matériels (e.g. connectique) et logiciels dédiés pour interagir avec une interface homme-machine d'un véhicule automobile, qui permet de diffuser des indications visuelles et/ou sonores dans l'habitacle du véhicule. Ainsi, grâce à ces moyens, le système 100 selon l'invention peut provoquer la diffusion d'une indication visuelle et/ou sonore par une interface homme-machine d'un véhicule automobile.

Par ailleurs, afin de mettre en œuvre au moins l'une des étapes du procédé selon l'invention décrit ci-dessous, le système 100 selon l'invention comprend des moyens matériels et logiciels pour interagir avec un appareillage de communication par signaux radiofréquences d'un véhicule automobile, qui permet de communiquer avec des entités communicantes, notamment avec un serveur distant, en utilisant des réseaux et protocoles de communication conventionnels (e.g. 3G/4G, ITS-G5, C/LTE/5G-V2X). Ainsi, grâce à ces moyens, le système 100 selon l'invention est notamment en mesure de recevoir des données transmises par un serveur distant, en particulier des données caractérisant au moins un lieu où se trouve un panneau de signalisation particulier, et il peut également transmettre des données à destination d'un serveur distant.

Selon l'invention, tous les éléments décrits ci-dessus contribuent pour permettre au système 100 selon l'invention de mettre en œuvre, à bord d'un véhicule automobile, un procédé de gestion du fonctionnement d'un appareillage d'aide à la conduite du véhicule, tel que décrit ci-dessous en lien avec la figure 2.

Selon une première étape 201 du procédé selon l'invention, le système 100 selon l'invention détermine si le véhicule est en approche d'un lieu où une réglementation particulière du code de la route s'applique. Selon l'invention, un lieu où une réglementation particulière du code de la route s'applique est, par exemple, un lieu où débute une section en travaux, l'entrée d'un péage autoroutier, l'entrée d'une douane, un lieu où se trouve un passage piéton, un virage dangereux, un panneau stop, etc. Et pour déterminer si le véhicule est en approche d'un tel lieu, le système 100 selon l'invention exploite des données transmises par un serveur distant configuré pour fournir à des véhicules des données caractérisant au moins un lieu où se trouve un panneau de signalisation particulier. Un tel panneau de signalisation particulier est, par exemple, un panneau indiquant le début d'une section en travaux, un panneau indiquant l'entrée d'un péage autoroutier, un panneau indiquant l'entrée d'une douane, un panneau indiquant un virage dangereux, un panneau indiquant un passage piéton, un panneau stop, etc. Et c'est sur la base de ces données que le système 100 selon l'invention détermine si le véhicule est en approche d'un lieu où une réglementation particulière du code de la route s'applique, en calculant la distance qui sépare la position courante du véhicule du lieu où se trouve un panneau de signalisation particulier et en vérifiant si celle-ci est inférieure ou égale à une valeur seuil préétablie, qui est préférentiellement enregistrée sur le support de stockage de données 102 au moment de la conception du véhicule. Ainsi, selon cette première étape 201 du procédé, le système 100 selon l'invention détermine avantageusement si le véhicule est en approche d'un lieu où une réglementation particulière du code de la route s'applique en utilisant uniquement des données qui sont transmises par un serveur distant. En d'autres termes, contrairement aux appareillages d'aide à la conduite connus, le système 100 selon l'invention ne base pas sa perception de l'environnement de conduite sur des données générées par les appareils de détection de l'appareillage d'aide à la conduite du véhicule, et il s'affranchit donc des problématiques évoquées en préambule.

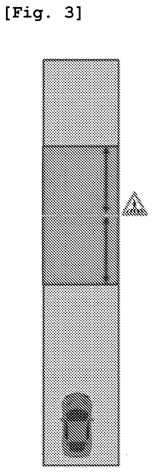

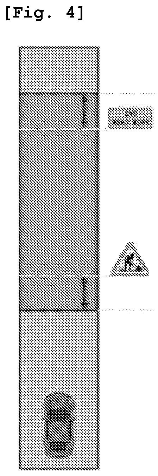

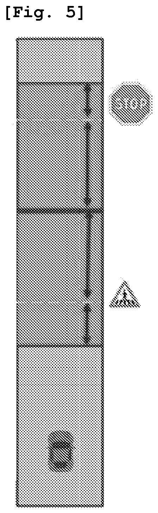

Ensuite, selon une deuxième étape 202 du procédé selon l'invention, que le système 100 selon l'invention réalise uniquement s'il a été établi au cours de l'étape précédente 201 que le véhicule approche d'un lieu où une réglementation particulière du code de la route s'applique, le système 100 selon l'invention détermine des données caractérisant un lieu en amont du lieu où une réglementation particulière du code de la route s'applique et un lieu en aval du lieu où une réglementation particulière du code de route s'applique. Par exemple, comme illustré sur la figure 3, lorsque les données caractérisant au moins un lieu où se trouve un panneau de circulation particulier reçues du serveur distant au cours de l'étape précédente 201 définissent un lieu où se trouve un panneau de signalisation indiquant un passage piéton, le système 100 selon l'invention détermine des données qui caractérisent un lieu en amont du lieu où se trouve le panneau de signalisation indiquant le passage piéton et un lieu en aval du lieu où se trouve le panneau de signalisation indiquant le passage piéton. En d'autres termes, le système 100 selon l'invention détermine la zone en gris foncé qui s'étend de part et d'autre du lieu où se trouve le panneau de signalisation indiquant le passage piéton. De même, comme illustré sur la figure 4, lorsque les données caractérisant au moins un lieu où se trouve un panneau de signalisation particulier reçues du serveur distant au cours de l'étape précédente 201 définissent un lieu où se trouve un panneau de signalisation indiquant le début d'une section en travaux et un lieu où se trouve un panneau de signalisation indiquant la fin de la section en travaux, le système 100 selon l'invention détermine au cours de la deuxième étape 202 un lieu en amont du lieu où se trouve le panneau de signalisation indiquant le début de la section en travaux et un lieu en aval du lieu où se trouve le panneau indiquant la fin de la section en travaux. De manière similaire, comme illustré sur la figure 5, lorsque les données les données caractérisant au moins un lieu où se trouve un panneau de signalisation particulier reçues du serveur distant au cours de l'étape précédente 201 définissent un lieu où se trouve un panneau de signalisation indiquant un passage piéton et un lieu où se trouve un panneau stop, et si ces deux lieux sont séparés par une distance inférieure à une valeur seuil préétablie enregistrée sur le support de stockage de données 102 au moment de la conception du véhicule, le système 100 selon l'invention détermine au cours de la deuxième étape 202 un lieu en amont du lieu où se trouve le panneau de signalisation indiquant le passage piéton et un lieu en aval du lieu où se trouve le panneau stop.

Ensuite, selon une troisième étape 203 du procédé selon l'invention, le système 100 selon l'invention gère le fonctionnement de l'appareillage d'aide à la conduite en fonction des données caractérisant un lieu en amont du lieu où une réglementation particulière du code de la route s'applique et un lieu en aval du lieu où une réglementation particulière du code de route s'applique. Par exemple, au cours de cette troisième étape 203, le système 100 selon l'invention réalise une étape consistant à provoquer la diffusion d'une indication visuelle et/ou sonore par l'interface homme-machine du véhicule dès lors que le véhicule approche du lieu en amont du lieu où une réglementation particulière du code de la route s'applique. Alternativement ou cumulativement, le système 100 selon l'invention réalise une étape consistant à provoquer une décélération du véhicule à partir du lieu en amont du lieu où une réglementation particulière du code de la route s'applique. Et, selon une autre alternative, le système 100 selon l'invention réalise une étape consistant à désactiver l'appareillage d'aide à la conduite entre le lieu en amont du lieu où une réglementation particulière du code de la route s'applique et le lieu en aval du lieu où une réglementation particulière du code de la route s'applique.

Par conséquent, aux termes du procédé et du système selon l'invention décrits ci-dessus, une solution est fournie pour permettre à un appareillage d'aide à la conduite d'un véhicule automobile de baser son fonctionnement, i.e. la fourniture de fonctionnalités d'aide à la conduite, sur une perception de l'environnement de conduite, notamment des panneaux de signalisation, qui soit établie autrement qu'en utilisant ses appareils de détection embarqués. Par ce biais, le procédé et le système selon l'invention améliorent donc significativement la sécurité des fonctionnalités de conduite autonome fournies par un appareillage d'aide à la conduite d'un véhicule automobile.

## Revendications

1. Procédé de gestion, par un système informatique (100) embarqué à bord d'un véhicule automobile, du fonctionnement d'un appareillage d'aide à la conduite du véhicule, le procédé comprenant les étapes de :
i) déterminer si le véhicule est en approche d'un lieu où une réglementation particulière du code de la route s'applique ; et, lorsqu'il est établi que tel est le cas,
ii) déterminer des données caractérisant un lieu en amont du lieu où une réglementation particulière du code de la route s'applique et un lieu en aval du lieu où une réglementation particulière du code de route s'applique ; et **caractérisé en ce que** le procédé comprend l'étape de :
iii) désactiver l'appareillage d'aide à la conduite entre le lieu en amont du lieu où une réglementation particulière du code de la route s'applique et le lieu en aval du lieu où une réglementation particulière du code de la route s'applique.

2. Procédé selon la revendication 1, **caractérisé en ce que** les étapes i) et ii) sont réalisées en exploitant des données caractérisant au moins un lieu où se trouve un panneau de signalisation particulier transmises par un serveur distant.

3. Procédé selon l'une des revendication précédentes, **caractérisé en ce que** l'étape iii) comprend une étape consistant à provoquer la diffusion d'une indication visuelle et/ou sonore par une interface homme-machine du véhicule.

4. Système (100) pour gérer le fonctionnement d'un appareillage d'aide à la conduite d'un véhicule automobile, **caractérisé en ce que** le système comprend au moins une unité de traitement d'informations (101), comprenant au moins un processeur, et un support de stockage de données (102) configurés pour mettre en œuvre un procédé selon l'une quelconque des revendications précédentes.

5. Programme d'ordinateur comprenant des instructions de code de programme pour l'exécution des étapes d'un procédé selon l'une quelconque des revendications 1 à 3 lorsque ledit programme est exécuté sur un ordinateur.

6. Support utilisable dans un ordinateur, **caractérisé en ce qu'**un programme selon la revendication 5 y est enregistré.

7. Véhicule automobile, **caractérisé en ce qu'**il comprend un système selon la revendication 4.

## Patentansprüche

1. Verfahren zur Steuerung des Betriebs eines Fahrerassistenzgeräts durch ein in einem Kraftfahrzeug eingebautes Computersystem (100), wobei das Verfahren folgende Schritte umfasst:
i) festzustellen, ob sich das Fahrzeug in der Nähe eines Ortes befindet, für den eine bestimmte Verkehrsordnung gilt, und, falls dies erwiesen ist,
ii) Daten zu ermitteln, die einen Ort kennzeichnen, der vor dem Ort liegt, an dem eine bestimmte Straßenverkehrsordnung gilt, und einen Ort, der hinter dem Ort liegt, an dem eine bestimmte Straßenverkehrsordnung gilt, und **dadurch gekennzeichnet ist, dass** das Verfahren den folgenden Schritt umfasst:
iii) die Fahrerassistenzausrüstung zwischen dem Ort, der vor dem Ort liegt, für den eine bestimmte Verkehrsordnung gilt, und dem Ort, der hinter dem Ort liegt, für den eine bestimmte Verkehrsordnung gilt, deaktivieren.

2. Verfahren nach Anspruch 1, **dadurch gekennzeichnet, dass** die Schritte i) und ii) unter Auswertung von Daten durchgeführt werden, die mindestens einen Ort charakterisieren, an dem sich eine bestimmte Signaltafel befindet, die von einem entfernten Server übertragen wird.

3. Verfahren nach einem der vorhergehenden Ansprüche, **dadurch gekennzeichnet, dass** der Schritt iii) einen Schritt umfasst, der darin besteht, die Ausstrahlung einer visuellen und/oder akustischen Anzeige durch eine Mensch-Maschine-Schnittstelle des Fahrzeugs zu bewirken.

4. System (100) zum Verwalten des Betriebs einer Vorrichtung zur Unterstützung des Fahrens eines Kraftfahrzeugs, **dadurch gekennzeichnet, dass** das System mindestens eine Informationsverarbeitungseinheit (101), die mindestens einen Prozessor umfasst, und ein Datenspeichermedium (102) umfasst, das konfiguriert ist, um ein Verfahren nach einem der vorhergehenden Ansprüche auszuführen.

5. Computerprogramm, das Programmcodeanweisungen zum Ausführen der Schritte eines Verfahrens nach einem der Ansprüche 1 bis 3 umfasst, wenn das Programm auf einem Computer ausgeführt wird.

6. Computerlesbares Medium, **dadurch gekennzeichnet, dass** ein Programm nach Anspruch 5 darin aufgezeichnet ist.

7. Kraftfahrzeug, **dadurch gekennzeichnet, dass** es ein System nach Anspruch 4 umfasst.

## Claims

1. A method of managing, by a computer system (100) on board a motor vehicle, the operation of an apparatus for assisting the driving of the vehicle, the method comprising the steps of:
i) determine whether the vehicle is approaching a location where a particular traffic regulation is applicable; and, where it is established that this is the case,
ii) determine data characterising a location upstream the location where a particular traffic code regulation is applicable and a location at the downstream of the location where a particular traffic code regulation is applicable; and wherein the process comprises the step of:
iii) deactivate the driving-assist apparatus between the location upstream the location where a particular traffic code regulation is applicable and the location at the downstream of the location where a particular traffic code regulation is applicable.

2. Method according to claim 1, wherein steps i) and ii) are realised by using data characterising at least one location where there is a particular signalling panel transmitted by a remote server.

3. Method according to one of the previous claims, wherein step iii) comprises a step consisting in causing a visual and/or sound indication to be broadcast by a human-machine interface of the vehicle.

4. System (100) for managing the operation of an apparatus for assisting in driving a motor vehicle, wherein the system comprises at least one information processing unit (101), comprising at least one processor, and a data storage medium (102) configured to implement a method according to any one of the previous claims.

5. A computer plan comprising plan code instructions for executing the steps of a method according to any one of claims 1 to 3 when said plan is executed on a computer.

6. Support usable in a computer, wherein a plan according to claim 5 is recorded therein.

7. Motor vehicle **characterised in that** it comprises a system according to claim 4.
